# EUROPEAN PATENT APPLICATION

(11) **EP 1 662 231 A2**
(43) Date of publication of application: **31.05.2006**
(21) Application number: 05025800.3
(22) Date of filing: 25.11.2005
(51) Int. Cl.: G01C 21/36, G01C 21/34, G08G 1/0969

(54) **Map drawing method and system, navigation apparatus and input/output device**

(30) Priority: 30.11.2004 JP 2004347480
(71) Applicant: AISIN AW CO., LTD., Anjo-shi, Aichi 444-1192 (JP)
(72) Inventor: Nakayama, Takaaki Aisin Aw Co., Ltd., Okazaki-shi Aichi 444-8564 (JP); Miura, Naoki Aisin Aw Co., Ltd., Okazaki-shi Aichi 444-8564 (JP)
(74) Representative: Kramer - Barske - Schmidtchen

(57) **Abstract**

A navigation apparatus is connected to an input/output apparatus for data transmission therebetween. The navigation apparatus includes a GPS receiver and a road data storage unit, and the input/output apparatus includes map drawing data storage unit, in which map drawing data related to coordinate data is stored, and a touch panel for displaying a map image. The navigation apparatus transmits coordinates of a vehicle location and direction to the input/output apparatus. The input/output apparatus reads map drawing data corresponding to the received coordinates and the direction from the map drawing data storage unit and displays the read map drawing data on the touch panel. The input/output apparatus marks the vehicle location on the touch panel in accordance with the coordinates of the vehicle location and direction.

## Description

The disclosure of Japanese Patent Application No. 2004-347480 filed November 30, 2004, including the specification, drawings and abstract thereof, is incorporated herein by reference in its entirety.

The present invention relates to a map drawing method, a map drawing system, a navigation apparatus, and an input/output apparatus.

Conventional on-board vehicle navigation apparatus has the capabilities of displaying a vehicle location superimposed on a map image of an area in the vicinity of the vehicle location, searching for an optimum route to a destination, and providing guidance along the optimum route by displaying the route on the map. Map drawing data used to display the map image for various areas is stored in storage means disposed in the navigation apparatus (as disclosed, for example, in Japanese Unexamined Patent Application Publication No. 10-122890).

Some recently developed navigation instruments have the capability of displaying a map image, not only in the form of a plan view, but also in other forms specified by a user, such as a bird's-eye view or a three-dimensional view. Some navigational devices allow a user to select the shape of a marker indicating the vehicle location.

There is a trend toward provision of a greater variety of functions for displaying a map in a more detailed fashion. However, such an increase in functions results in an increase in the size of the map data, and the increase in the data size results in an increase in the load imposed on the navigation apparatus in various operations such as reading of data, drawing the map image, etc. The increase in load, in turn, slows the output of route guidance.

When the map data is updated to reflect recent changes in roads, or when a user interface is upgraded to make it possible to display map images in other forms, it is necessary to change the software of the navigation apparatus, although no change is required in the essential functions, such as the route searching function and the route guidance function, of the navigation apparatus.

In view of the above problems, it is an object of the present invention to provide a map drawing method, a map drawing system, a navigation apparatus, and an input/output apparatus capable of reducing the load imposed on the navigation apparatus.

Another object of the present invention is to provide a map drawing method, a map drawing system, a navigation apparatus, and an input/output apparatus having an easily upgradeable map drawing function.

In one embodiment of the present invention, the navigation apparatus includes vehicle location detection means and search means for searching road data stored in a storage means to determine a guidance route. The navigation apparatus is connected to an input/output apparatus including map data storage means in which map data, correlated with location data, is stored and also including display means for displaying a map image. That connection allows data to be transmitted between the navigation apparatus and the input/output apparatus. When a map image is displayed on the display means, the navigation apparatus transmits location data indicating the vehicle location to the input/output apparatus. The input/output apparatus reads map data corresponding to the location data and displays the read map data on the display means. The input/output apparatus also displays the vehicle location marker indicating the vehicle location in accordance with the location data. Because the location data transmitted from the navigation apparatus has a smaller size than that of the map data, the transmission of the data to the input/output apparatus is completed within a short period of time. The navigation apparatus does not need to read the map data, and the vehicle location is displayed using the small size location data. Thus, the load imposed on the navigation apparatus is reduced. Furthermore, the map data stored in the input/output apparatus may be changed without changing the software of the navigation apparatus, thus simplifying change of the map data.

In another embodiment, the road data stored in the road data storage means and the map data stored in the map data storage means of the input/output apparatus both include identification data identifying roads. The navigation apparatus determines a guidance route and transmits identification data indicating the determined guidance route to the input/output apparatus. The input/output apparatus marks the guidance route mark on the display means in accordance with the received identification data and the identification data included in the map data. Because the identification data transmitted from the navigation apparatus has a smaller size than that of the map data, the transmission of the data to the input/output apparatus is completed within a short time.

In yet another embodiment, the road data stored in the road data storage means and the map data stored in the map data storage means of the input/output apparatus both include coordinate data identifying roads. In such an embodiment, the navigation apparatus determines a guidance route and transmits coordinate data indicating the determined guidance route to the input/output apparatus. The input/output apparatus marks the guidance route on the display means in accordance with the received coordinate data and the coordinate data included in the map data. Because the coordinate data transmitted from the navigation apparatus has a smaller size than that of the map data, the transmission of the data to the input/output apparatus is completed within a short time.

In another embodiment, the present invention provides a method wherein the steps performed by the navigation apparatus include determining whether the vehicle location is close to, i.e., within a given distance from, a guidance diagram displaying point, and if it is determined that the vehicle location is close to a guidance diagram displaying point, transmitting guidance display command data to command drawing of a guidance diagram. The steps performed by the input/output apparatus include reading map data used to display a guidance diagram, in accordance with the guidance display command data, and displaying the guidance diagram on the display means in accordance with the read map data. Because the guidance display command data transmitted from the navigation apparatus has a smaller size than that of the map data, the transmission of the data to the input/output apparatus is completed within a short time.

In a preferred embodiment of the method, the guidance diagram is an enlarged map of an area within the vicinity of an intersection and the guidance diagram displaying point is an intersection, and the guidance display command data includes data indicating the shape of the intersection and data indicating the direction to be taken by the vehicle at the intersection. This allows a reduction in the size of the guidance display command data.

In yet another embodiment, the present invention provides a map drawing system including the navigation apparatus having vehicle location detection means and adapted to read road data. The map drawing system also includes the input/output apparatus having map data storage means, in which map data related to location data is stored, and display means. The navigation apparatus and the input/output apparatus are connected to each other such that data can be transmitted therebetween. The navigation apparatus includes first transmission means for transmitting location data, indicating the vehicle location, to the input/output apparatus. The input/output apparatus includes first reading means for reading map data corresponding to the received location data, first display control means for displaying the read map data on the display means, and location display control means for displaying a vehicle location marker in accordance with the location data. Because the location data transmitted from the navigation apparatus has a smaller size than that of the map data, the transmission of the data to the input/output apparatus is completed within a short time. The navigation apparatus need not necessarily read the map data, because the vehicle location is displayed using the small size location data, thus reducing the load imposed on the navigation apparatus. Furthermore, the map data stored in the input/output apparatus may be changed without changing the software of the navigation apparatus, thus facilitating change of the map data.

In another embodiment of the map drawing system, wherein road data stored in the road data storage means and map data stored in the map data storage means of the input/output apparatus both include identification data identifying roads, the navigation apparatus includes search means for searching for a guidance route, and second transmission means for transmitting the identification data indicating the guidance route to the input/output apparatus. The first display control means of the input/output apparatus marks the guidance route in accordance with the received identification data and the identification data included in the map data. Because the identification data transmitted from the navigation apparatus has a smaller size than that of the map data, the transmission of the data to the input/output apparatus is completed within a short time.

In another embodiment of the map drawing system, wherein road data stored in the road data storage means and map data stored in the map data storage means of the input/output apparatus both include coordinate data identifying roads, the navigation apparatus includes search means for searching for a guidance route, and second transmission means for transmitting the coordinate data indicating the guidance route to the input/output apparatus. The first display control means of the input/output apparatus draws the guidance route in accordance with the received coordinate data and the coordinate data included in the map data. Because the coordinate data transmitted from the navigation apparatus has a smaller size than the size of the map data, the transmission of the data to the input/output apparatus is completed within a short time.

In another embodiment, the present invention provides a navigation apparatus which includes determination means for determining whether the vehicle location is close to, i.e. within a given distance of, a guidance diagram displaying point, and third transmission means for, responsive to a determination that the vehicle location is close to a guidance diagram displaying point, transmitting guidance display command data to the input/output apparatus to command drawing of a guidance diagram. The input/output apparatus includes second reading means for reading map data used to display the guidance diagram in accordance with the guidance display command data, and second display control means for displaying the guidance diagram on the display means in accordance with the read map data. Because the guidance display command data transmitted from the navigation apparatus has a smaller size than the map data, the transmission of the data to the input/output apparatus is completed within a short time.

In another embodiment, the navigation apparatus includes the vehicle location detection means and is adapted to read road data. The navigation apparatus is connected to the input/output apparatus including map data storage means for storing map data correlated with location data and display means for displaying a map image, so that data can be transmitted between the input/output apparatus and the navigation apparatus. The navigation apparatus includes first transmission means for transmitting location data indicating the vehicle location to the input/output apparatus. The input/output apparatus, responsive to receipt of data indicating the vehicle location, reads map data associated with the vicinity of the vehicle location in accordance with the location data, and displays the map data on the display means. Because location data transmitted from the navigation apparatus has a smaller size than the map data, the transmission of the data to the input/output apparatus is completed within a short time. The navigation apparatus need not read the map data, because the vehicle location is displayed using the smaller size location data, thus reducing the load imposed on the navigation apparatus. Furthermore, the map data stored in the input/output apparatus may be changed without changing the software of the navigation apparatus, thus facilitating change of the map data.

In yet another embodiment, the navigation apparatus includes search means for searching for a guidance route from the vehicle location to a destination, and second transmission means for transmitting the identification data indicating the guidance route to the input/output apparatus. The road data includes identification data which is the same as identification data included in the map data stored in the map data storage means of the input/output apparatus. This makes it possible for the input/output apparatus to read map data in accordance with the identification data received from the navigation apparatus and to display the read map data on the display means. Because the identification data transmitted from the navigation apparatus is small in size, the transmission of the data can be completed within a short time.

In another embodiment of the navigation apparatus, the second transmission means transmits the coordinate data, indicating the guidance route, to the input/output apparatus. The road data includes coordinate data which is the same as coordinate data included in the map data stored in the map data storage means of the input/output apparatus. This makes it possible for the input/output apparatus to read map data in accordance with the coordinate data received from the navigation apparatus and to display the read map data on the display means. Because the size of the coordinate data transmitted from the navigation apparatus is small, the transmission can be completed within a short time.

In another embodiment, the navigation apparatus includes determination means for determining, based on the road data, whether the vehicle location is close to a guidance diagram displaying point, and third transmission means for, responsive to a determination that the vehicle location is close to a guidance diagram displaying point, transmitting guidance display command data to the input/output apparatus to command drawing of a guidance diagram. Because the guidance display command data transmitted from the navigation apparatus has a smaller data size than that of the map data, the transmission of the data to the input/output apparatus is completed within a short time.

In another embodiment, the present invention provides an input/output apparatus which includes vehicle location detection means and is connected to a navigation apparatus adapted to read road data, so that data can be transmitted between the input/output apparatus and the navigation apparatus. The input/output apparatus includes display means for displaying a map image and map data storage means for storing map data related to location data. The input/output apparatus further includes receiving means for receiving vehicle location data from the navigation apparatus, reading means for reading map data in accordance with the received location data, and display control means for displaying a map image on the display means in accordance with the read map data. That is, because the input/output apparatus has the map data storage means integrated therein, it is possible to change the map data stored in the input/output apparatus without changing the software of the navigation apparatus, thus facilitating change of the map data.

Fig. 1 is a block diagram of a route guidance system according to an embodiment of the present invention.

Fig. 2 is a block diagram of the guidance controller in the system of Fig. 1.

Fig. 3 is a block diagram of the input/output controller in the system of Fig. 1.

Fig. 4 is a flow chart of a routine for display of a vehicle location.

Fig. 5 illustrates a screen displayed on the touch panel.

Fig. 6 illustrates another screen displayed on the touch panel.

Fig. 7 is a flow chart of a routine for displaying an enlarged map.

Fig. 8 illustrates yet another screen displayed on the touch panel.

Fig. 9 illustrates still another screen displayed on the touch panel.

Fig. 10 is a flow chart of a process for updating an enlarged map.

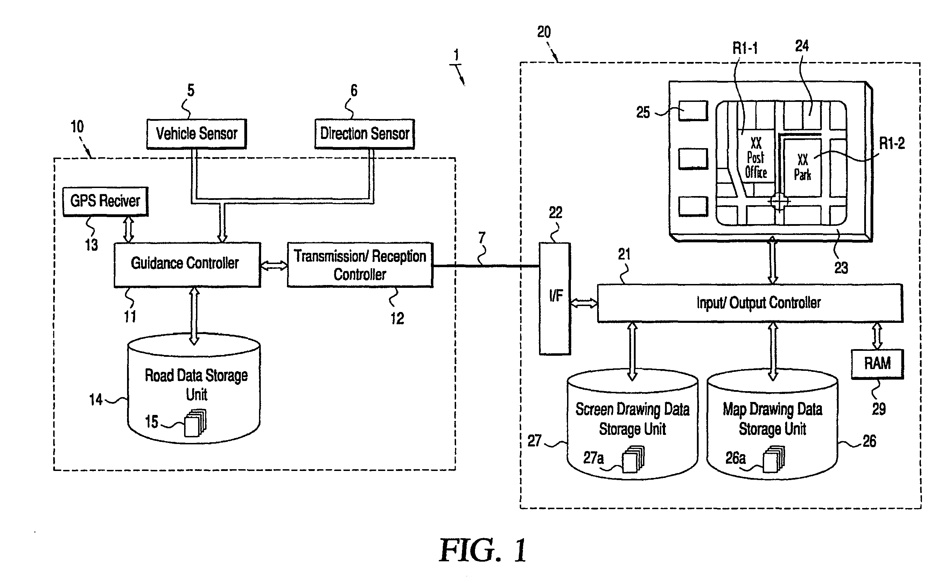

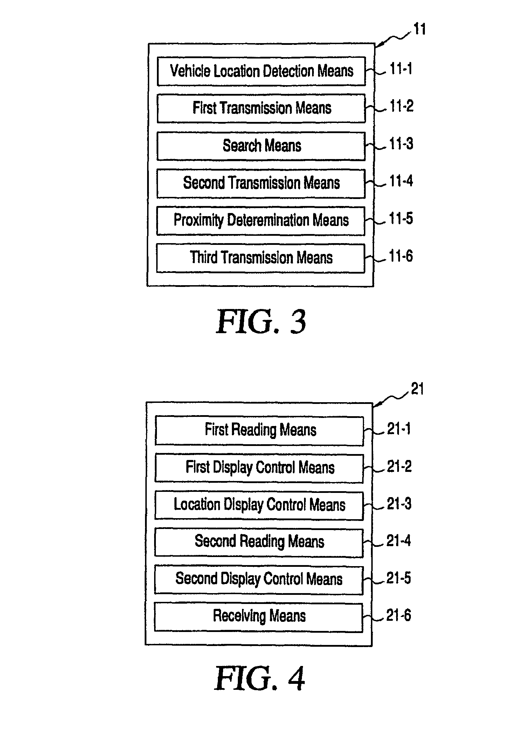

The present invention will now be further described with reference to Figs. 1 to 10.

As shown in Fig. 1, the route guidance system 1, which is the embodiment of a map drawing system in accordance with the present invention, includes a navigation apparatus 10 installed in a vehicle and an input/output apparatus 20. The navigation apparatus 10 has a guidance controller 11 including vehicle location detection means 11-1, first transmission means 11-2, search means 11-3, second transmission means 11-4, proximity determination means 11-5 and third transmission means 11-6. The guidance controller 11 is a guidance module including a CPU for searching for a route and a RAM as hardware and software including a search program, a vehicle location display program, an enlarged map display program, and an enlarged map update program.

The navigation apparatus 10 includes a transmission/reception control unit 12 serving as reception control means and transmission control means. The transmission/reception control unit 12 controls transmission of various data between the navigation apparatus 10 and the input/output apparatus 20 via the cable 7. The transmission/reception control unit 12 and the cable 7 may conform to a known interface standard such as the IEEE (the Institute of Electrical and Electronic Engineers) 1394 standard.

The navigation apparatus 10 includes a GPS (Global Positioning System) receiver 13, serving as the vehicle location detection means, whereby the latitude, the longitude and the altitude of the vehicle location are calculated based on radio signals received from GPS satellites. When radio signals transmitted from GPS satellites have poor reception, the guidance controller 11 acquires various data from a vehicle sensor 5 and a direction sensor 6 in the vehicle and determines the vehicle location based on the relative vehicle speed and the relative direction, calculated from the acquired data. The guidance controller 11 also corrects the vehicle location based on the data received via the GPS receiver 13.

The navigation apparatus 10 also includes a road data storage unit 14 serving as road data storage means. For example, a hard drive may be used as the road data storage unit 14, and road data 15 including identification data, coordinate data and intersection data is stored in the road data storage unit 14. The road data 15 includes data associated with roads in each unit area of a country and the identification data. The identification data, in turn, includes node data and link data, coordinate data indicating latitudes and longitudes, road width data, and road type data. The road data 15 also includes intersection data (guidance display command data) for indicating each intersection as a simplified shape (guidance diagram display point).

The input/output apparatus 20 connected to the navigation apparatus 10 via the cable 7 has an input/output controller 21 including first reading means 21-1, first display control means 21-2, location display control means 21-3, second reading means 21-4, second display control means 21-5 and receiving means 21-6. The input/output controller 21 includes hardware such as a CPU and software.

The input/output controller 21 is connected to the navigation apparatus 10 via an interface 22, according to the IEEE1394 standard or the like, via the cable 7, such that various types of data can be transmitted between the input/output controller 21 and the navigation apparatus 10.

The input/output apparatus 20 includes a display unit 23 serving as display means. The display unit 23 (an example of the "display means") includes a touch panel 24 for displaying images and switches 25. The input/output controller 21 executes a command input via the touch panel 24 or one or more of the switches 25.

The input/output apparatus 20 includes a map drawing data storage unit 26 serving as map data storage means, e.g. a hard drive. Map drawing data 26a including map data, identification data and coordinate data associated with respective unit areas of the country is stored in the map drawing data storage unit 26. The map drawing data 26a includes identifiers identifying locations other than roads, such as urban areas, privately owned areas, and facilities, and also includes background data for drawing such areas. The map drawing data 26a also includes data for drawing an intersection in an enlarged form based on intersection data included in the road data 15 stored in the navigation apparatus 10, and further includes text data representing road names, facility names, etc.

The map drawing data 26a also includes identification data including node data and link data, and coordinate data indicating longitudes and latitudes corresponding to roads drawn on a map. That is, the map drawing data 26a includes node data, link data, and coordinate data which are identical to those included in the road data 15 stored in the road data storage unit 14 of the navigation apparatus 10.

The input/output apparatus 20 also includes a screen drawing data storage unit 27 serving as map data storage means, e.g. a hard drive. The screen drawing data storage unit 27 stores screen drawing data 27a for displaying screens having various forms or designs. More specifically, the screen drawing data 27a is drawing data representing images other than maps, such as menu screens, search screens, etc., wherein each menu screen or search screen may include link data or identifiers pointing to other screens to which the current screen can be switched. The screen drawing data 27a includes drawing data for drawing a vehicle location marker, such as an arrow or a car-shape mark. The screen drawing data 27a may include data for drawing three-dimensional images of buildings or the like on the map, and may further include a program for calculating the height and the width of each building as seen from the vehicle location. The navigation apparatus 10 also includes a RAM 29 for temporarily storing the map drawing data 26a and other data.

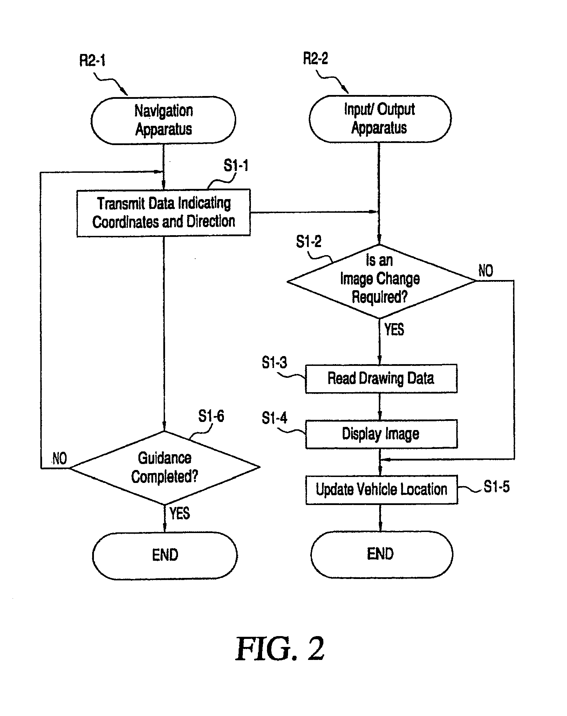

A vehicle location display program will now be described with reference to Fig. 2. In the following, it is assumed that the input/output apparatus 20 and the navigation apparatus 10 are in a vehicle location display mode.

If the navigation apparatus 10 is in a route search mode in which a route to a destination is searched, a route search program is executed. In execution of the route search program, when data specifying the destination is input to the input/output apparatus 20 via the switches 25 or the touch panel 24 of the input/output apparatus 20, the data is transmitted to the navigation apparatus 10 via the cable 7. In accordance with this received data and the current vehicle location, the navigation apparatus 10 searches for an optimum guidance route to the destination, based on the road data 15. The guidance controller 11 transmits at least one of the identification data (node data and link data) and the coordinate data associated with the guidance route to the input/output apparatus 20 via the cable 7.

Based on data received from the vehicle sensor 5, the direction sensor 6, and the GPS receiver 13, the guidance controller 11 of the navigation apparatus 10 outputs the coordinate data (location data) indicating the vehicle location and the direction data, indicating the direction of the vehicle at predetermined intervals, to the input/output apparatus 20 via the cable 7 (step S1-1).

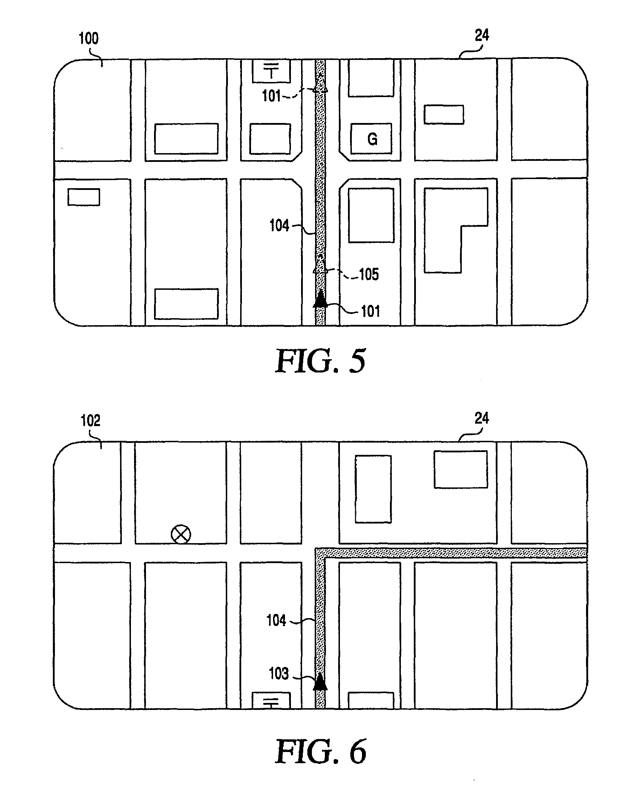

When the input/output controller 21 of the input/output apparatus 20 receives the coordinate data and the direction data, the input/output controller 21 determines whether the image currently displayed on the touch panel 24 should be changed (step S1-2). More specifically, if the input/output controller 21 determines that the vehicle location has moved, for example, from the location indicated by the lower vehicle location marker 101 in Fig. 5, to the upper marker 101 represented by a dotted line in Fig. 5, and that the vehicle location at the current point of time is outside the map 100 displayed on the screen of the touch panel 24, the input/output controller 21 determines that the map image should be changed to a new map image so as to include the current vehicle location. The input/output controller 21 also determines whether a user has issued a command to change the display form, e.g. the vehicle location marker, or a command to display the image in the three-dimensional display mode. If it is determined that such a command has been issued, the input/output controller 21 determines that the map image should be changed in accordance with the command.

When the input/output controller 21 determines that the image display should be changed (that is, if the answer in step S1-2 is yes), the input/output controller 21 reads the map drawing data 26a or the screen drawing data 27a (step S1-3). More specifically, if the input/output controller 21 determines that as a result of movement of the vehicle location, it has become necessary to change the map image, the input/output controller 21 reads the map drawing data 26a needed to display a new map for the area around the current vehicle location. On the other hand, if a display form change command has been issued, the input/output controller 21 reads the screen drawing data 27a.

The input/output controller 21 then displays an image on the touch panel 24 based on the read map drawing data 26a or screen drawing data 27a (step S1-4). For example, the map image 100 including the vehicle location marker 101 shown in Fig. 5 is changed to a map image 102 including a vehicle location marker 103 as shown in Fig. 6. In this case, the map image 102 represents an area adjacent to an area represented by the map image 100. When operation is set in the route search mode, the input/output controller 21 displays the route path 104 ("route mark" or "marked route"), indicating the guidance route, superimposed on the map image 102 based on the identification data or coordinate data received from the navigation apparatus 10.

When the command to change the vehicle location marker (or "cursor") is issued, the input/output controller 21 changes the current vehicle location marker 101, for example from an arrow to a vehicle shape. When a command to display the image in a three-dimensional display mode is issued, the input/output controller 21 reads the screen drawing data 27a associated with nearby buildings. Based on the read screen drawing data 27a, the input/output controller 21 calculates the height and width of each building and displays the buildings in a three-dimensional fashion on the map. After the image is displayed on the touch panel 24 under the control of the input/output controller 21, the process proceeds to step S1-5.

After the displaying of the image on the touch panel 24 in step S1-4 is completed, the input/output controller 21 updates the vehicle location based on the received coordinate data (step S1-5). In the case in which the input/output controller 21 determines that change of the image is not needed (that is, if the answer to step S1-2 is no), the process jumps to step S1-5, in which the input/output controller 21 updates the vehicle location based on the received coordinate data. That is, when there is no need to change the map data 100, only the location of the vehicle location marker 101 shown in Fig. 5 is changed, for example, to the position represented by a dotted line as with the vehicle location marker 105.

The navigation apparatus 10 determines whether the guidance including displaying of the vehicle location and the route guidance has been completed (step S1-6). If the guidance is not completed (that is, if the answer to step S1-6 is no), the above-described process is repeated. If it is determined that the guidance is completed (that is, if the answer to step S1-6 is yes), the process is ended.

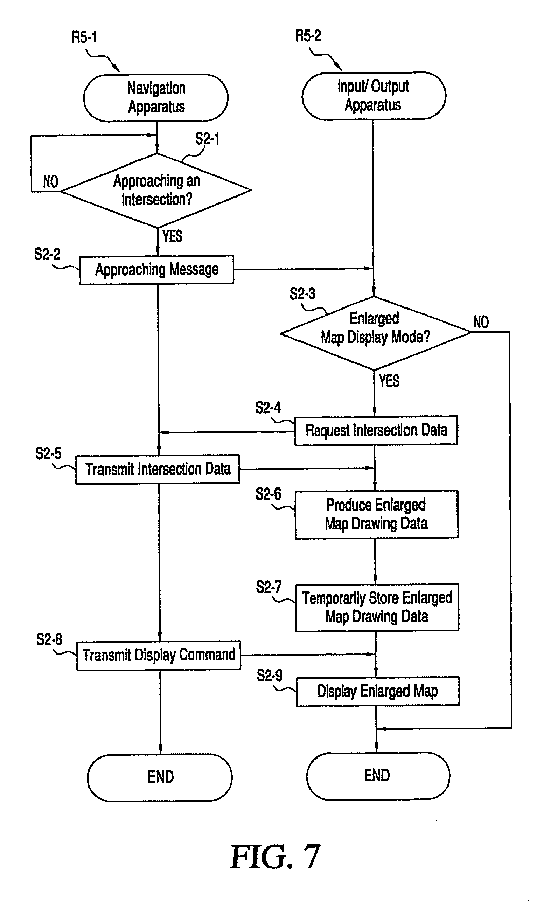

Now, a process for displaying an enlarged map according to an enlarged map display program is described with reference to Figs. 7 to 9. The enlarged map displaying program is executed concurrently with execution of the vehicle location display program, when the navigation apparatus 10 is in the route guidance mode.

As shown in Fig. 7, the guidance controller 11 of the navigation apparatus 10 determines, based on the guidance route determined in the route search process and the road data 15, whether the vehicle location is approaching an intersection (guidance diagram displaying point) (step S2-1). More specifically, the determination is made by checking whether the distance between the vehicle location and the intersection is less than a predetermined value (for example, 20 m). If the vehicle location is not within the predetermined distance from the intersection (that is, if the answer to step S2-1 is no), the determination as to whether the vehicle is approaching the intersection is repeated.

If it is determined that the vehicle is approaching an intersection (that is, if the answer to step S2-1 is yes), the guidance controller 11 transmits an approach message to the input/output apparatus 20 via the transmission/reception control unit 12 and via the cable 7 (step S2-2). In this situation, as shown in Fig. 6, the vehicle location marker 111 and the marked guidance route 112 are displayed on the touch panel 24, superimposed on the map image 110.

When the input/output apparatus 20 receives the approach message, the input/output apparatus 20 searches a storage unit (not shown) to determine whether the operation is in the mode in which an intersection is displayed in an enlarged form. (step S2-3). The map enlargement mode is selectable, i.e. it may be enabled or disabled, and the input/output apparatus 20 does or does not display the enlarged map, depending on the status of the map enlargement mode. If the map enlargement mode is disabled (that is, if the answer to step S2-3 is no), the process is ended.

On the other hand, if the map enlargement mode is enabled (that is, if the answer to step S2-3 is yes), the input/output apparatus 20 transmits a request for intersection data (guidance display command data) to the navigation apparatus 10 via the interface 22 and the cable 7 (step S2-4).

Responsive to receipt of a request for intersection data, the navigation apparatus 10 extracts intersection data from the road data 15 and transmits the extracted intersection data to the input/output apparatus 20 (step S2-5). The intersection data transmitted by the navigation apparatus 10 includes data representing a simplified shape of the intersection and data indicating allowable travel directions (straight, to left, to right, etc.) at that intersection. The input/output apparatus 20 receives the intersection data via the cable 7 and the interface 22. Based on the received intersection data, the input/output apparatus 20 reads map drawing data 26a from the map drawing data storage unit 26 and produces enlarged map drawing data representing the enlarged map of the intersection (step S2-6). The produced enlarged map drawing data is temporarily stored in the RAM 29 (step S2-7).

When the vehicle location becomes sufficiently close to the intersection (for example, as close as 10 m before the intersection), the navigation apparatus 10 transmits a command to display the enlarged map (step S2-8). Responsive to receipt of the display command, the input/output apparatus 20 reads the enlarged map drawing data temporarily stored in the RAM 29 and displays an enlarged map on the touch panel 24 (step S2-9). More specifically, as shown in Fig. 7, the enlarged map 113 is displayed as a guidance diagram in one area (half area) of the split screen displayed on touch panel 24. In this enlarged map 113, a mark 115 indicating a direction in which the vehicle should travel is displayed together with an enlarged image 114 of the intersection. In the other half of the split screen of the touch panel 24, for example, a main part of the map image 110 is displayed.

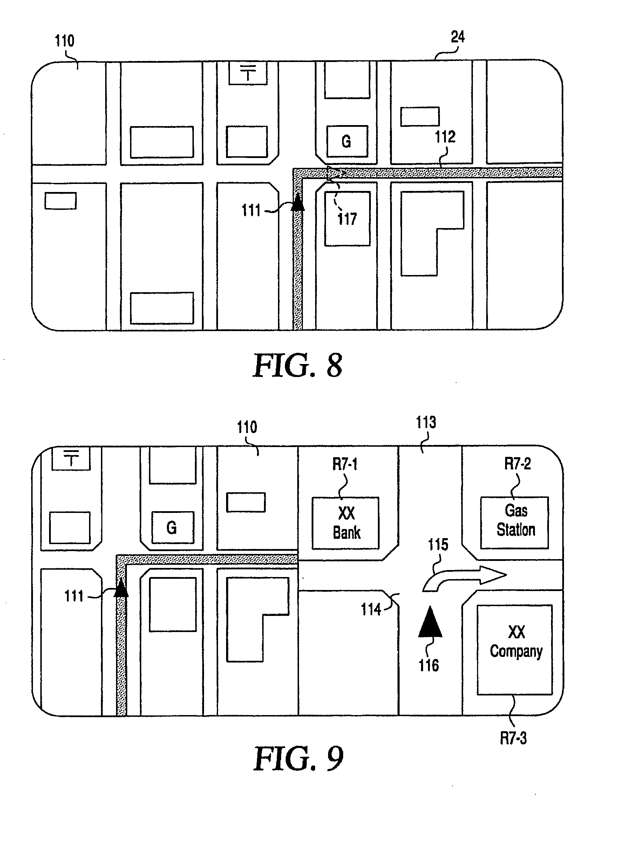

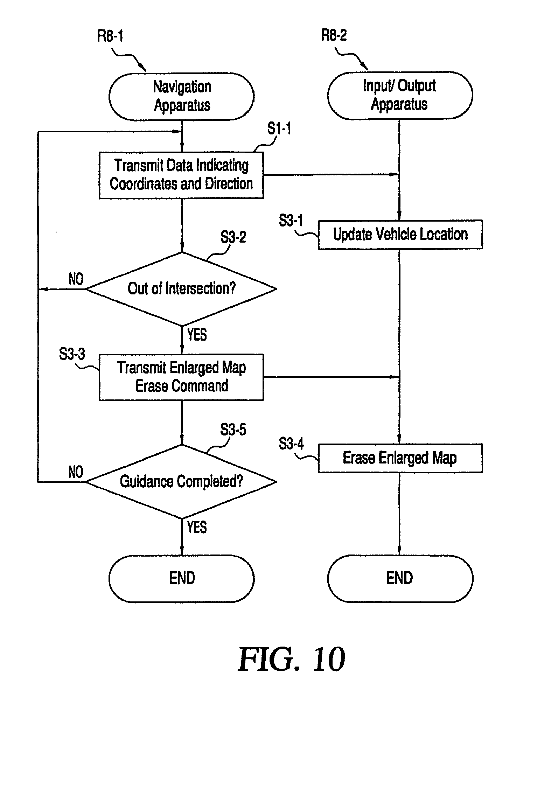

Now, an enlarged map updating program is described with reference to Fig. 10. In the mode in which the enlarged map 113 is displayed on the touch panel 24, the guidance controller 11 of the navigation apparatus 10 also transmits the coordinate data and the direction data associated with the vehicle location to the input/output apparatus 20 via the cable 7 as in the vehicle location display routine (step S1-1). Responsive to receipt of the coordinate data and the direction data, the input/output controller 21 updates the location at which the vehicle location marker 116 is displayed on the enlarged map 113, based on the received coordinate data and direction data (step S3-1). The input/output controller 21 also updates the location of the vehicle location marker 111 on the map image 110 displayed in the left-hand half area in Fig. 9.

The guidance controller 11 of the navigation apparatus 10 determines, based on the road data 15, whether the vehicle has passed through the intersection (step S3-2). If it is determined that the vehicle location is still in the intersection (that is, if the answer to step S3-2 is no), the guidance controller 11 repeats the process of transmitting the coordinate data and the direction data associated with the vehicle location.

If the guidance controller 11 determines that the vehicle location has passed the intersection (that is, if the answer to step S3-2 is yes), the guidance controller 11 transmits an enlarged map erase command to the input/output apparatus 20 via the cable 7 (step S3-3). When the input/output apparatus 20 receives the enlarged map erase command, the input/output apparatus 20 erases the enlarged map 113 displayed on the touch panel 24 (step S3-4). The input/output apparatus 20 then displays a map image 110 for the entire display area as shown in Fig. 8. At this point of time, the vehicle location mark is displayed at a location 117 out of the intersection, as represented by a dotted line.

In the next step, the guidance controller 11 determines whether the route guidance is completed, for example because the vehicle has arrived at the destination (step S3-5). If the route guidance is completed (that is, if the answer to step S3-5 is no), the process is ended. However, if the route guidance is not completed (that is, if the answer to step S3-5 is yes), the process described above is repeated.

The present invention provides the following advantages.

In the first embodiment, the navigation apparatus 10 (guidance controller 11) is connected via the cable 7 to the input/output apparatus 20 including the map drawing data storage unit 26, the screen drawing data storage unit 27, the display unit 23, and the input/output controller 21 for reproducing a voice/sound, such that data can be transmitted between the navigation apparatus 10 and the input/output apparatus 20. The navigation apparatus 10 transmits the coordinate data and the direction data associated with the vehicle location to the input/output apparatus 20.

The input/output apparatus 20 reads map drawing data 26a or screen drawing data 27a corresponding to the received coordinate data and direction data, and displays the map drawing data 26a or screen drawing data 27a on the touch panel 24. The input/output apparatus 20 displays the vehicle location mark according to the coordinate data. In the vehicle location displaying process, the coordinate data and the direction data transmitted from the navigation apparatus 10 to the input/output apparatus 20 have a smaller size than that of the map drawing data 26a and the screen drawing data 27a, and thus the transmission of data to the input/output apparatus 20 can be completed within a short time. The processing load is shared such that the navigation apparatus 10 executes the vehicle location detecting and route searching programs, while the input/output apparatus 20 executes the routines for displaying the map image and the like, and thus the processing load imposed on the navigation apparatus 10 in the map drawing process is reduced. This allows improvements in performance of the vehicle location detection and other functions of the navigation apparatus 10. Updating of the map data and changing of the user interface can be performed simply by connecting the input/output apparatus 20 to the navigation apparatus 10 after the map drawing data 26a or the screen drawing data 27a stored in the input/output apparatus 20 is updated.

In the embodiment described above, the road data 15 stored in the road data storage unit 14 disposed in the navigation apparatus 10 includes identification data (node data and link data) identifying roads and associated coordinate data. The map drawing data 26a stored in the map drawing data storage unit 26 disposed in the input/output apparatus 20 also includes identification data identifying roads and associated coordinate data. In the route guidance search, the navigation apparatus 10 searches for a guidance route and transmits identification data or coordinate data associated with the guidance route to the input/output apparatus 20. In accordance with the received identification data (or the coordinate data) and the identification data (or the coordinate data) associated with the map drawing data 26a, the input/output apparatus 20 displays the marked (drawn) route superimposed on the map image. Thus, in route guidance also, the navigation apparatus 10 transmits identification data or coordinate data of a size smaller than the size of the map drawing data 26a or the like. Therefore, the transmission of data to the input/output apparatus 20 can be completed within a short time.

In the embodiment described above, the navigation apparatus 10 determines whether the vehicle location is approaching an intersection. If it is determined that the vehicle location is approaching an intersection, the navigation apparatus 10 transmits intersection data representing the shape of the intersection and travel directions allowed at the intersection, based on the road data 15. In accordance with the received intersection data, the input/output apparatus 20 reads the map drawing data 26a used to display the enlarged map, including the intersection, and displays the enlarged map 113 on the touch panel 24 based on the map drawing data 26a. Thus, in the displaying of the enlarged intersection map also, the intersection data transmitted from the navigation apparatus 10 has a smaller size than that of the map drawing data 26a. Therefore, the transmission of the data to the input/output apparatus 20 is completed within a short time. Because the navigation apparatus 10 does not need to read the map drawing data 26a used to display the enlarged map, the load imposed on the navigation apparatus 10 is reduced.

The invention is not limited to the embodiment described above, and various modifications are possible. Some examples are described below.

When it is determined that the vehicle is approaching an intersection (that is, when the answer in step S2-1 is yes), the navigation apparatus 10 may immediately transmit intersection data to the input/output apparatus 20 (step S2-5). That is, steps S2-2 to S2-4, which determine whether the enlarged map displaying mode is enabled, may be omitted.

When the input/output apparatus 20 receives the intersection data, the input/output apparatus 20 may immediately produce the enlarged map drawing data (step S2-6) and may display it on the touch panel 24 without temporarily storing it in the RAM 29 (step S2-9). That is, the process of temporarily storing the enlarged map drawing data in the RAM 29 and waiting for the command from the navigation apparatus 10 (steps S2-7 and S2-8) may be omitted.

In the enlarged map updating process (steps S1-1 and S3-1 to S3-5), the determination as to whether the vehicle has completely passed through (exited) an intersection (step S3-2) may be made by the input/output apparatus 20 based on the coordinate data received from the navigation apparatus 10 and the node data and the link data included in the map drawing data 26a. In this case, transmission of the enlarged map erase command (step S3-3) is omitted.

As taught above, when the enlarged map including an intersection is displayed, the determination is made as to whether the distance between the vehicle location and the intersection is less than a predetermined distance (for example, 20 m) (step S2-1). Optionally, the "predetermined distance" may vary with the vehicle speed.

The guidance diagram display points at which a guidance diagram is displayed on the touch panel 24 are not limited to intersections, and may be other points such as a lane change point, a tollgate, or an expressway exit. At these points, depending on the type, a lane guidance map, a tollgate guidance map, or a similar map is displayed as a guidance diagram on the touch panel 24, and the guidance display command data includes lane guidance data indicating, for example, the number of lanes, or tollgate data indicating the number of gates, locations of ETC (Electronic Toll Collection System) gates, or the like.

When a lane guidance map is displayed on the touch panel 24, for example, if the guidance controller 11 of the navigation apparatus 10 determines, based on the road data 15, that there are two or more lanes in the approach to an intersection, the guidance controller 11 transmits lane guidance data (guidance display command data) to the input/output apparatus 20. The lane guidance data is included in the road data 15, and the lane guidance data includes data indicating the number of lanes, data indicating the types of the respective lanes, such as a lane for traveling straight through the intersection, a right turn lane, or the like, and data indicating the lane in which the vehicle should be located in order to follow the guidance route. Based on the received lane guidance data, the input/output apparatus 20 displays on the touch panel 24 a lane guidance map (a guidance diagram) representing a plurality of lanes, with marking, e.g. highlighting, of that lane along which the vehicle should travel.

In the embodiment described above, the map drawing data 26a includes node data and link data corresponding to roads to be displayed in a map and associated coordinate data indicating longitudes and latitudes. Alternatively, the map drawing data 26a may include only node data and link data or coordinate data. In the case in which the map drawing data 26a includes only coordinate data, the navigation apparatus 10 transmits coordinate data indicating the guidance route to the input/output apparatus 20.

Although in the embodiment described above, the guidance controller 11 transmits coordinate data and direction data as location data indicating the vehicle location, the guidance controller 11 may transmit only coordinate data. Node data and link data may be transmitted as location data.

The road data storage unit 14 of the navigation apparatus 10 may be an optical disk mounted on a disk drive (not shown) disposed in the navigation apparatus 10.

The cable for the connection between the navigation apparatus 10 and the input/output apparatus 20 is not limited to an IEEE1394 cable, i.e. another high-speed serial bus may be used or the connection between the navigation apparatus 10 and the input/output apparatus 20 may be achieved using an optical communication channel. That is, any communication interface may be used for the connection between the navigation apparatus 10 and the input/output apparatus 20 as long as the connection can be established.
The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method of drawing a map image on display means by using a navigation apparatus (11) and an input/output apparatus (20), the navigation apparatus including vehicle location detection means (13) for detecting a vehicle location, and search means for reading road data from road data storage means (14) to determine a guidance route, the input/output apparatus including map data storage means (26), in which map data related to location data is stored, and display means (23) for displaying the drawn map image, the input/output apparatus being connected to the navigation apparatus for data transmission therebetween, the method comprising:
transmitting location data, indicating the vehicle location, from the navigation apparatus to the input/output apparatus;
receiving the transmitted location data at the input/output apparatus and reading map data, corresponding to the received location data, from the map data storage means,
displaying a map image on the display means in accordance with the read map data, and
displaying a vehicle location marker, in accordance with the received location data, superimposed on the map image.

2. The method of drawing a map image according to Claim 1, wherein
the road data stored in the road data storage means of the navigation apparatus and the map data stored in the map data storage means of the input/output apparatus both include identification data identifying roads,
the method further comprising, utilizing the navigation apparatus:
searching for a guidance route from the vehicle location to a destination, based on the road data; and
transmitting identification data indicating the guidance route to the input/output apparatus; and
utilizing the input/output apparatus, marking the guidance route on the display means in accordance with the received identification data and the identification data included in the map data.

3. The method of drawing a map image according to Claim 1, wherein
the road data stored in the road data storage means of the navigation apparatus and the map data stored in the map data storage means of the input/output apparatus both include coordinate data identifying roads,
the steps of the method utilizing the navigation apparatus further comprising:
searching for a guidance route from the vehicle location to a destination, based on the road data, and
transmitting coordinate data indicating the guidance route to the input/output apparatus, and
utilizing the input/output apparatus, marking the guidance route on the display means in accordance with the received coordinate data and the coordinate data included in the map data.

4. The method of drawing a map image according to Claim 1, further comprising, utilizing the navigation apparatus:
determining, based on the road data, whether the vehicle location is within a predetermined distance from a guidance diagram displaying point, and
responsive to a determination that the vehicle location is within the predetermined distance to a guidance diagram displaying point, transmitting guidance display command data to the input/output apparatus to command drawing of a guidance diagram, based on the road data, and
further comprising, utilizing the input/output apparatus:
reading map data for display of a guidance diagram associated with the guidance diagram displaying point from the map data storage means, in accordance with the guidance display command data, and
displaying the guidance diagram on the display means in accordance with the read map data.

5. The method of drawing a map image according to Claim 4, wherein
the guidance diagram is an enlarged map of an area in the vicinity of an intersection and the guidance diagram displaying point is the intersection, and
the guidance display command data includes data indicating the shape of the intersection and data indicating the direction in which the vehicle should travel.

6. A map drawing system for guidance of a vehicle, the map drawing system including a navigation apparatus (10) and an input/output apparatus (20) connected to the navigation apparatus for transmission of data therebetween, wherein the navigation apparatus comprises:
vehicle location detection means (13) for detecting location of the vehicle; and
first transmission means (11) for transmitting location data indicating the vehicle location to the input/output apparatus, and
wherein the input/output apparatus comprises:
map data storage means (26) for storing map data correlated with location data;
display means (23) for displaying a map image;
first reading means (21) for reading map data corresponding to the location data received from the map data storage means;
first display control means (21) for displaying a map image on the display means in accordance with the read map data; and
location display control means (21) for displaying a vehicle location marker, in accordance with the received location data, superimposed on the map image.

7. A navigation apparatus comprising:
vehicle location detection means (13) for detecting a vehicle location;
road data storage means (14) for storing road data to be read in searching for a guidance route from the vehicle location to a destination; and
first transmission means (11) for transmitting location data indicating the vehicle location to an input/output apparatus (20); and
wherein the navigation apparatus is connected to the input/output apparatus so that data can be transmitted between the input/output apparatus and the navigation apparatus, the input/output apparatus including map data storage means for storing map data related to location data and display means for displaying a map image.

8. An input/output apparatus connected to a navigation apparatus (10) for data transmission therebetween, the navigation apparatus including vehicle location detection means (13) for detecting a vehicle location, the navigation apparatus being adapted to read road data for searching for a guidance route from road data storage means (14), the input/output apparatus comprising:
display means (23) for displaying a map image;
map data storage means (26) for storing map data correlated with location data;
receiving means (21) for receiving vehicle location data transmitted from the navigation apparatus;
first reading means (21) for reading map data from the map data storage means, in accordance with the received location data;
first display control means (21) for displaying a map image on the display means in accordance with the read map data; and
location display control means (21) for displaying a vehicle location marker, in accordance with the received location data, superimposed on the map image.
